(19) Europäisches Patentamt
European Patent Office
Office européen des brevets

(11) **EP 2 643 737 B1**

(12) **EUROPEAN PATENT SPECIFICATION**

(45) Date of publication and mention
of the grant of the patent:
**25.01.2017 Bulletin 2017/04**

(21) Application number: **11801621.1**

(22) Date of filing: **22.11.2011**

(51) Int Cl.:
**G05B 15/02** *(2006.01)*

(86) International application number:
**PCT/EP2011/070720**

(87) International publication number:
**WO 2012/069497 (31.05.2012 Gazette 2012/22)**

(54) **IMPROVEMENTS IN AND RELATING TO ELECTRICITY SUPPLY MANAGEMENT SYSTEMS AND HOT WATER STORAGE SYSTEMS**

VERBESSERUNGEN AN UND IM ZUSAMMENHANG MIT STROMVERSORGUNGVERWALTUNGSSYSTEMEN UND WARMWASSERSPEICHERSYSTEMEN

AMÉLIORATIONS À ET ASSOCIÉS À DES SYSTÈMES DE GESTION D'ALIMENTATION EN ÉLECTRICITÉ ET À DES SYSTÈMES DE STOCKAGE D'EAU CHAUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 GB 201019762**
**09.12.2010 IE S20100773**
**05.04.2011 IE S20110164**

(43) Date of publication of application:
**02.10.2013 Bulletin 2013/40**

(73) Proprietor: **Cooper, Timothy Patrick**
**County Dublin (IE)**

(72) Inventor: **Cooper, Timothy Patrick**
**County Dublin (IE)**

(74) Representative: **Litton, Rory Francis et al**
**Cruickshank & Co.**
**8a Sandyford Business Centre**
**Sandyford**
**Dublin 18 (IE)**

(56) References cited:
**US-A1- 2004 263 116    US-A1- 2006 036 350**
**US-A1- 2006 155 423    US-A1- 2008 167 756**
**US-A1- 2010 114 385**

**Description**

**Introduction**

The invention relates to an electricity supply management system incorporating a hot water storage system in a dwelling, commercial building or the like.

Electricity supply management systems, or Demand Side Management (DSM) systems, which are currently available on the market are of a relatively simplistic nature and a large potential for efficiency savings may be realised through development of these DSM systems. One of the difficulties in operating current DSM systems in an efficient manner is as a result of the complexity associated with providing, analysing and managing a large amount of data in the DSM systems in substantially real-time. If the data provided to the DSM systems is out of date, then the decisions made by the DSM systems will not reflect the current conditions on an electricity supply grid, in the dwelling or commercial building and/or for any on site generators which may also supply electricity to the dwelling, electricity supply grid and/or commercial building.

An integral part of many DSM systems is the use of an energy storage unit to temporarily store excess energy which can then be used to supply energy to the household or export electricity to the electricity supply grid. It is important that any such energy storage units are as efficient as possible. The use of a hot water storage system such as an immersion heater, commonly found in many households and commercial properties already, as the energy storage unit has been widely discussed. However, immersion heaters are not as efficient as is desirable and a number of problems are known to exist with the current control systems and operation generally of immersion heaters.

Immersion heaters are normally found in hot water cylinders and are typically controlled by a simple timer and a thermostat arrangement. The timer supplies electricity to the immersion heater in accordance with a schedule stored in the timer. When the heater is switched on, the temperature of the water in the hot water cylinder will rise until a predetermined temperature is reached at which point the thermostat switches the immersion heater off as a safety measure. Once the temperature falls below this predetermined level or an alternatively present level, the immersion heater may be switched on again in accordance with on the schedule.

The immersion heater is generally switched on at full power to a switched on state, or is in a switched off state. This only provides very coarse control of the heating of the water within the hot water cylinder. The simple timers that are used with immersion heaters are not adaptive and typically the settings on the timer are set with approximate guesses as to the hot water requirements of the household or building. As the hot water requirements of the household/building change over time, the timer settings in the immersion heater, also referred to throughout the specification interchangeably as the hot water cylinder, may not be altered to take account of and reflect the changing hot water requirements.

The hot water in a hot water cylinder stratifies when hot water is not being pumped out of the cylinder, with a layer of the hottest water rising to and settling to the top of the hot water cylinder. As the immersion heater is generally located adjacent the bottom of the hot water cylinder, once the immersion heater is switched on, the hot water generated by the immersion heater at the bottom of the hot water cylinder will rise upward in the hot water cylinder. This causes large convection currents to be established within the hot water cylinder. As a result, all of the water in the hot water cylinder is heated up to the preset temperature as the large convection currents cause the immersion heater energy output to be supplied to all of the water within the hot water cylinder. This can result in too much water being heated up, beyond the hot water requirements of the household at that time.

As the immersion heater output currently does not take account of existing water temperatures and anticipated heating demand, the operation of the hot water storage system results in over-heating of the water, both in terms of the temperature of the hot water and the volume of hot water that is heated, and, consequently excessive internal circulation caused by the convection currents mentioned above prevails. This excessive circulation results in water at the bottom of the hot water cylinder tank being heated unnecessarily and subsequently the hot water storage system suffers from greater heat loss because of increased convective transfer of heat from the core of the hot water cylinder tank.

A further problem with the efficiency of DSM systems, as alluded to hereinbefore, is the lack of a general communications system and method. A relatively simple two-way communication protocol between DSM systems and central control systems is desired. At present, the use of complex wired network-based medication protocols has led to the need for computationally expensive hardware to be used. Moreover, the speed and reliability of conventional switched communication systems such as the Internet network, broadband networks, satellite networks, and cellular networks and the like have been found to be insufficiently fast for real-time distributed DSM control.

US Patent Publication Number US2006/036350 (BOHRER et al.) discloses a demand side management system in which the controller uses price point profiles in its memory to select the appropriate setpoints for the systems under its control. The controller has monitoring means for detecting the operating parameters of the systems it controls. However, this system is disadvantaged by the use of set profiles in its memory as it is not adaptive.

US Patent Publication Number US2010/114385 (DEMPSTER et al.) discloses a self-learning algorithm which is used by a controller to optimise the energy consumption of the device used in a building automation system, in particular an air conditioning system. The self-learning algorithm is not applied to optimise the energy consumption of a device in a building so as to improve the efficiency of the demand side electricity supply management system.

The present invention is directed towards a method and apparatus which will improve the efficiency of electricity supply management systems and the control and operational management of immersion heaters. Moreover, a relatively simple, two-way communication protocol between DSM systems and central controller systems to improve the efficiency of the electricity supply management system is desired.

**Summary of Invention**

According to the invention there is provided an electricity supply management system, including a terminal user facility having an energy storage device; means for monitoring one or more operating parameters of the energy storage device; said monitoring means being connected to a controller which is operably connected to the energy storage device for controlling operation of the energy storage device; the terminal user facility being connected to an electrical power supply grid; said electrical power supply grid having at least one control centre that receives monitoring data from weather monitoring and forecast services/facilities, grid monitoring and control devices and/or electricity generating facilities, and having means to generate a data stream containing this monitoring data and transmitting said data stream by radio signal; and, the terminal user facility having a receiver to a receiver to receive said radio signal carrying the data stream, said receiver being connected to the controller such that the controller can optimise operation of the energy storage device in response to the data stream received from the control centre.

The advantage of using this type of electricity supply management system is that a relatively simple communications setup may be used. Existing radio transmitters may be used to broadcast the data stream from the central controller which forms part of the electricity supply grid. The monitoring data may be preferably transmitted to the central controller along the existing electricity supply grid. Therefore, the installation of relatively cheap and simple radio receivers in each dwelling or commercial building will allow a full communications system to be established and can ensure that a relatively large amount of data collected from various different sources such as a weather prediction centre, the electricity supply grid market operators, electricity generators and electricity suppliers which are all connected to the electricity supply grid, and this information can be combined and broadcast in a substantially real-time period to a large number of electricity supply management systems installed in various dwellings and/or commercial buildings to ensure that the dwelling or commercial building is using electricity in an efficient manner based on the prevailing, real-time conditions which equates to the monitoring data.

In one embodiment of the invention the controller includes self-learning algorithm that can determine the precise operating characteristics of the energy storage device connected thereto. The self-learning algorithm can greatly improve the efficiency of a DSM system, otherwise known as an electricity supply management system, by adapting the response of the DSM system according to the particular operating characteristics of the energy storage devices used in the household or commercial building and/or the requirements of the occupants of the household where the DSM system is installed. The operating characteristics of the energy storage device include, inter alia, heat dispersion rate, heat drop rate, temperature rise per joule rate, temperature drop rate, heat transfer rate, standing loss, heater conductivity rate, energy transfer efficiency, power efficiency and the like. In some cases the improvement in efficiency has been measured upwards of 30%.

The energy storage device may conveniently be provided by an immersion heater. Alternative energy storage devices may be used such as electric space heaters or the like. In further embodiment, it is also envisaged to use other energy storage devices such as small water boilers which are typically found in kitchens and operate at higher temperatures than immersion heaters, and electric cookers which are heated using thermal storage materials. It will be generally understood that any type of well insulated heat storage device could be used with the present invention without any major structural changes to the system.

In a further embodiment, the present invention is directed to an immersion heater operation manager, control system and method.

In one embodiment, an initial calibration period will be used to determine the characteristics of an immersion heater by the immersion heater manager, which may form part of the DSM system or stand alone as a separate unit, and/or the calibration period may be also used for determining the hot water requirements of the occupants in a household during a normal usage period.

In yet a further embodiment, the DSM system logs the hot water usage of a household by monitoring in the amount of hot water which is used from a hot water cylinder, along with the duration of use and time of use. Thereafter, the DSM system can generate a schedule of typical hot water usage within a household and can therefore predict likely hot water usages and requirements. Consequently, in combination with the characteristics of the immersion heater, the DSM system can ensure that a minimum amount of energy is input into the immersion heater to generate a sufficient amount of hot water to provide for the hot water usage requirement according to the schedule of typical hot water usage.

In a further embodiment, the immersion heater may be gradually heated up so as to prevent large convection currents being established within the hot water cylinder. Careful power control can be used to ensure that the immersion heater is only gradually heated and therefore large convection currents can be avoided.

The present invention is advantageous as it only uses data obtained using low cost temperature sensors on the hot water system to accurately characterise the hot water system and to build up and continually update a schedule of hot water usage. The invention uses this schedule of hot water usage together with current hot water temperature measurements to calculate the minimum amount of power required to heat the hot water using the immersion heater in the hot water cylinder, and a thyristor is used to control the amount of power supplied to the immersion heater accordingly. Preliminary trials have indicated that this type of control will result in a reduction in energy used for hot water systems in the region of 15 to 20%.

In one embodiment, the characteristics of the hot water system comprise the capacity of the immersion heater, which may be garnered by reading the notice of the capacity of the immersion heater on the immersion heater itself, or by monitoring the real-time use using a current transducer.

In a further embodiment, the characteristics of the hot water system may further comprise the temperature of the water in the hot water cylinder beside the immersion heater. Preferably, this may be determined by a low-cost thermistor inserted into the mounting slot where the standard thermal start is typically found.

In another embodiment, the temperature of the outlet pipe from the hot water cylinder is measured using a low-cost thermistor which may be clamped, strapped, or affixed using glue or other such means to an exposed section of the outlet pipe. The temperature indicates is hot water is flowing through the outlet pipe as the temperature of the pipe will drop when water is stagnant in the pipe due to heat loss through the pipe. Therefore, tap-on and tap-off events can be measured in a relatively simple manner without any flow meters or other such expensive equipment required.

In yet another embodiment, the characteristics of the hot water system further comprise the local time so that temperature and other such readings may be logged against a time record. The time may be received by the DSM system using a radio link, or the DSM system may have its own internal clock.

In a further embodiment, the characteristics of the hot water system may further comprise self-learning algorithm which can preferably monitor the initial calibration period to measure the rate of rise of temperature when the immersion heater is operating at full capacity and the rate of fall of temperature within the hot water cylinder when the immersion heater is not operating. Moreover, the standing loss from the hot water cylinder may be monitored.

The frequency, temperature and volume of hot water used during hot water usage events may be monitored by the self-learning algorithm so that a continuous temperature profile from the various thermistors located on the hot water system may be generated. In particular, the continuous temperature profile from the hot water output pipe can create a schedule of "tap-on" and "tap-off" events and also monitor the hot water temperature. This will assist with creating the schedule of typical hot water usage by a household. The tap-on and tap-off events are determined by monitoring the rate of change of temperature along with the absolute change of temperature in the hot water cylinder. These determinations are compared to the dynamic comparator values. These comparator values are dynamic in the sense that the values act as thresholds which can indicate a tap-on or tap event, and the threshold themselves change to take account of recent activity with the hot water cylinder. For example, during periods of inactivity general temperature variations and fluctuations may occur in the hot water cylinder and these could be confused for a tap-on event during periods of inactivity. Therefore, during these periods of inactivity, the threshold for determining a tap-on event is greater than at other periods where there has been recent activity such as a tap-on event.

In a sense, these dynamic comparator values are used as indicators of certain actions occurring. For example, a tap being turned on or a tap being turned off. The temperature profile obtained from the thermistors is continuously changing for a variety of reasons including, inter alia, hot water flowing out of the hot water cylinder tank; the immersion heater supplying energy to the hot water cylinder tank; and/or convection currents in the hot water cylinder tank. The magnitude of the variations in the hot water cylinder tank registered by the thermistors changes over time in response to the above mentioned events. Therefore, the comparator values are adjusted over time in response to these events to enable the system to accurately differentiate between significant events such as tap-on and tap-off events, for example, and other insignificant events such as natural temperature variations and fluctuations.

In further embodiment, on-going iterative processes may ensure that the power delivered to immersion heater is at a most efficient level. In particular, the power delivered to immersion heater may be regulated by a solid-state relay device (SSR device) to ensure that the hot water requirements as dictated by the schedule of typical hot water usage are being met; to minimise heat losses from the hot water cylinder by keeping the temperature of the hot water in the cylinder as low as possible while still meeting the hot water requirements, both actual and predicted; keep the temperature of the immersion heater as low as possible during heating of the hot water cylinder so as to minimise the convection circulation within the tank and thus reduce the associated heat losses and waste of energy; minimise the use of electricity during peak periods; continually adjust the model of the hot water system held in the DSM system by observing changes in hot water use over a long-term period, and also short-term periods as occupants change, appliances in the household change and lifestyles change. Additionally, the typical changes due to different periods during the year such as summer and winter and very short term changes due to weekend usage and holiday usage and the like can be monitored and factored into consideration by the DSM system.

In one embodiment, a thermistor is fixed to a hollow copper rod adjacent a free end of the hollow copper rod, whereby the hollow copper rod comprises cables running through the centre of the hollow copper rod to allow the thermistor to be connected to a thyristor which is mounted on the hollow copper rod. An advantage of such a system is that the heat generated by the thyristor can be directed back into the hot water cylinder via the copper rod thus cooling the thyristor. The copper rod may be placed in the mounting slot that the standard thermostat is found in a hot water cylinder and immersion heater system.

In yet a further embodiment, the thyristor may be bonded onto the hot water cylinder itself as the hot water cylinder acts as an ideal heat sink for the thyristor. Advantageously, the thyristor maybe affixed to the hot water cylinder using an appropriate type of glue.

In a preferred embodiment, the DSM system will ensure that the temperature in the hot water cylinder is brought above a predetermined temperature to ensure that the operation of the hot water cylinder is in compliance with local regulatory requirements. For example, it is known that the temperature of hot water in hot water cylinder must be brought above a temperature of 65°C once every month, for example, to ensure that Bacteria Legionella does not grow within the hot water cylinder.

In another embodiment the terminal user facility is connected to a local natural power generator for receiving power therefrom, the controller being operable for regulating the supply of power from the local natural power generator. Natural power generators include, for example, wind turbines and solar panels.

In a further embodiment, it will be understood that any form of communications such as that applications over cellular networks such as 2G networks, 3G networks, 4G networks can be used. Furthermore, the data stream could be piggybacked on to existing communications systems such as wireless networks which are normally used to carry the Intranet, the Internet, WiFi networks, MiFi networks and the like. It is also envisaged that existing landline telephony a networks could be used, cable television communication cabling could be used, alarm system to medication cabling and the electricity supply grid could also be used to carry the data stream of information to the terminal user facility. Fibre optical cabling and other such light-based networks may also be used.

In yet a further embodiment, it is envisaged to use a hybrid communications protocol incorporating a radio transmission between a central control server and a plurality of the DSM systems whereby the radio link provides one-way communication from the central control server to the plurality of DSM systems, and, the DSM systems, users and operators of the DSM systems, electricity suppliers and the like may communicate with the central control servers using existing communication systems as mentioned hereinbefore. In this manner and effective two-way communication system may be implemented in a relatively simple manner, which is less complex than the existing two-way communication systems whereby both communication channels use the existing communication systems.

Advantageously, the Radio Data System (RDS) communication protocol may be used for the radio communications from the central control server(s) to the plurality of DSM systems.

In yet a further embodiment, it is envisaged that a smart phone applications, commonly known as apps, may be used to provide instructions from a user or household owner from their smart phone to the central control server to effect changes to the operation of the immersion heater and the DSM system by altering time-related characteristics, hot water requirement characteristics and the like.

In a further embodiment, the central controller servers can log all instructions from homeowners and network operators and electricity suppliers so that a full datalog of all messages sent to every DSM will be kept on the server itself.

Various types of DSM commands will be processed by the servers such as, inter alia, time based tariff profiles that will be sent to the controllers from time to time, real-time over-riding commands that reflect the current condition of the grid, the ratio of output to demand, the current market value, and planned and un-planned outages of the electricity supply grid.

Advantageously, the above described two-way communication protocol will allow homeowners and immersion heater owners and operators to fully control the immersion heater without having to access the controller associated with the immersion heater, or hot water system in general. This will lead to a simpler construction of the controller units themselves which will reduce cost and complexity of the hot water system in household and commercial buildings like.

The present invention is directed towards an electricity supply management system for a terminal user facility connected to an electrical power supply grid, the terminal user facility comprising an energy storage device with means for monitoring one or more operating parameters of the energy storage device; the monitoring means being connected to a controller which is operably connected to the energy storage device for controlling operation of the energy storage device; wherein, the controller comprises a self-learning algorithm that can determine the operating characteristics of the energy storage device connected thereto so as to improve the efficiency of the electricity supply management system by adapting the response of the electricity supply management system in accordance with the determined operating characteristics of the energy storage device.

In a further embodiment, the energy storage device is an electric space heater. In a further embodiment, the energy storage device is a small water boiler. In a further embodiment, the energy storage device is an electric cooker which is heated using thermal storage materials.

In a further embodiment, the energy storage device is a hot water cylinder comprising an immersion heater.

In a further embodiment, the controller performs an initial calibration to determine the characteristics of the hot water cylinder.

In a further embodiment, the calibration is used to determine the hot water requirements of the occupants in the terminal user facility during a normal usage period.

In a further embodiment, the electricity supply management system logs the hot water usage of the terminal user facility by monitoring the amount of hot water which is used from the hot water cylinder, the duration of use and time of use.

In a further embodiment, the electricity supply management system generates a schedule of typical hot water usage within the terminal user facility and subsequently predicts likely hot water usages and requirements so as to ensure that a minimum amount of energy is input into the hot water cylinder to generate a sufficient amount of hot water to provide for the hot water usage requirement according to the schedule of typical hot water usage.

In a further embodiment, the hot water cylinder is gradually heated up so as to prevent large convection currents being established within the hot water cylinder.

In a further embodiment, the electricity supply management system comprises low cost temperature sensors mounted on the hot water cylinder and adjacent piping to accurately monitor the hot water cylinder and adjacent piping so as to build up and continually update a schedule of hot water usage.

In a further embodiment, the characteristics of the hot water cylinder comprise the capacity of the immersion heater. In a further embodiment, the low cost temperature sensors are thermistors. In a further embodiment, the characteristics of the hot water system comprises the current temperature of the water in the hot water cylinder adjacent the immersion heater.

In a further embodiment, the electricity supply management system measures the temperature of an outlet pipe from the hot water cylinder using a thermistor.

In a further embodiment, tap-on and tap-off events are measured by measuring the temperature of the outlet pipe which is indicative of whether hot water is flowing through the outlet pipe.

In a further embodiment, the self-learning algorithm monitors the initial calibration period by measuring the rate of rise of temperature of water in the hot water cylinder when the immersion heater is operating at full capacity, and, the rate of fall of temperature of water in the hot water cylinder when the immersion heater is not operating.

In a further embodiment, the frequency, temperature and volume of hot water used during hot water usage events are monitored by the self-learning algorithm so that a continuous temperature profile is generated from readings given by a plurality of thermistors located on the hot water cylinder.

In a further embodiment, the readings given by a plurality of thermistors are compared to dynamic comparator values, which are adjustable thresholds, to indicate a tap-on or tap event; and, the dynamic comparator values are adjust to take account of recent activity with the hot water cylinder.

In a further embodiment, power delivered to the immersion heater is regulated by a solid-state relay device (SSR device) to ensure that hot water requirements as dictated by the schedule of typical hot water usage are met, and, to minimise heat losses from the hot water cylinder by keeping the temperature of the water in the hot water cylinder as low as possible while still meeting the hot water requirements.

In a further embodiment, the electricity supply management system further comprises a thermistor fixed to a hollow copper rod adjacent a free end of the hollow copper rod, whereby the hollow copper rod comprises cables running through the centre of the hollow copper rod connecting the thermistor to the solid-state relay device; and, the copper rod being dimensioned so as to be mountable in a thermostats mounting slot in the hot water cylinder.

In a further embodiment, the solid-state relay device is bonded to the hot water cylinder to allow the hot water cylinder to act as a heat sink for the solid-state relay device.

In a further embodiment, the electrical power supply grid has at least one grid control centre to receive monitoring data from weather monitoring and forecast services and/or facilities, grid monitoring and control devices, and/or electricity generating facilities; the electrical power supply grid having means to generate a data stream containing the monitoring data; the electrical power supply grid transmitting the data stream by radio signal; the terminal user facility having a radio receiver to receive the radio signal carrying the data stream; the radio receiver being connected to the controller such that the controller can optimise operation of the energy storage device in response to the data stream received from the grid control centre.

In a further embodiment, the system uses a hybrid communications protocol incorporating a radio transmission between the grid control centre and a plurality of the user terminal facilities; whereby, the radio link provides one-way communication from the grid control centre to the plurality of user terminal facilities, and, user terminal facilities communicate with the grid control centre using an alternative communication system.

In a further embodiment, the Radio Data System (RDS) communication protocol is used for the radio communications from the grid control centre to the terminal user facility.

In a further embodiment, the grid control centre may transmit time based tariff profiles, real-time over-ride commands and planned and un-planned outages of the electricity supply grid to the terminal user facility.

In a further embodiment, the user of the terminal user facility may communicate with the controller to allow the user to fully control the energy storage device remotely using the radio receiver of the terminal user facility.

## Detailed Description

The invention will be more clearly understood by the following description of some embodiments thereof, given by way of example only with reference to the accompanying drawing:

Figure 1 is a schematic illustration of a terminal user facility of an electricity supply management system according to the invention;

Figure 2 is a diagrammatic view of a hot water cylinder having an immersion heater;

Figure 3 is a diagrammatic view of a hot water cylinder showing stratification of water temperatures within the hot water cylinder after a period of inactivity;

Figure 4 is a further diagrammatic view of a hot water cylinder showing water temperatures throughout the hot water cylinder after the hot water cylinder has been recently heated resulting in large convection currents which heat all of the water in the hot water cylinder;

Figure 5 is a further diagrammatic view of a hot water cylinder showing water temperatures within the hot water cylinder whereby the hot water cylinder and associated immersion heater is controlled by a DSM system in accordance with the present invention;

Figure 6 is a graph showing power requirements and water usage over an initial period according to a standard immersion heater system, and a second period using an immersion heater with the DSM system as described in accordance with the present invention;

Figure 7 is a table illustrating the heat dissipation within the hot water cylinders of Figures 3 to 5;

Figure 8 is a graph showing water temperatures in a hot water cylinder during a period of no hot water use with the immersion heater switched on for a one-hour period;

Figure 9 is a graph showing water temperatures in a hot water cylinder during a period of some hot water use with the immersion heater switched off during the entire period; and,

Figure 10 is a graph illustrating the amount of hot water used during six separate tap-on events.

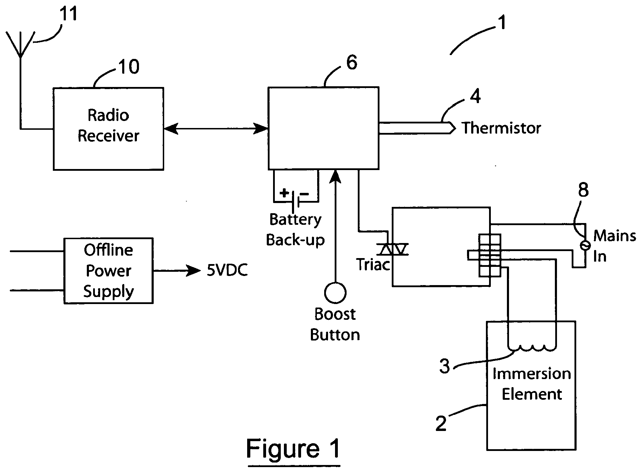

Referring to Figure 1 there is illustrated a terminal user facility for the electricity supply management system of the invention indicated generally by the reference numeral 1. The terminal user facility has an energy storage device, which in this case comprises an immersion heater 2 comprising a well insulated water tank, which is alternatively and interchangeably referred to as a water cylinder throughout this specification, heated by an immersion element 3. A temperature sensor, for example, a thermistor 4 is attached to or inserted into the hot water cylinder of the immersion heater 2. This thermistor 4 is connected to a controller 6 which is operably connected to the immersion heater 2 for controlling operation of the immersion heater 2.

The terminal user facility 1 is connected to an electrical power supply grid 8. The supply grid 8 has at least one control centre (not shown) that receives monitoring data from weather monitoring and forecast services/facilities, grid monitoring and control devices and electricity generating facilities. The control centre has means to generate a data stream containing this monitoring data and transmit said data stream by a radio signal. Typically a number of control centres will be provided on the power supply grid 8. These control centres use this data to determine when and where there is a need to increase or reduce the load on the grid and to generate a data stream containing this information in a form that can be transmitted by one or a number of radio stations and received and interpreted by the terminal user facility 1. Here again typically a large number of the terminal user facilities 1 will be connected to the grid 8. The data stream will include information about the location, electricity supplier, section of grid and site specific information for each package of data to enable the receiving devices in the terminal user facilities 1 to identify relevant packages of data.

Each terminal user facility 1 has a receiver 10 with associated antenna 11 to receive the radio signal from the control centre in the electrical power supply grid 8. This data will include weather information - present and predicted air temperature, cloud cover, humidity, wind speeds, wind direction and the like. The receiver 10 is connected to the controller 6. A keypad may be provided connected to the controller 6 for inputting locally generated data. Such data may be input via the keypad, PC, mobile phone and the like. For example, this data will define the hot water requirements of the household (times and temperatures).

The controller 6 uses the data received locally and via the radio signal from the control centre or centres in the power supply grid 8 and uses all the data to optimise the operation of the immersion heater 2. This optimisation process will take account of the data mentioned above and will also involve the use of self-learning algorithm in the controller 6 that can determine the precise characteristics of the immersion heater 2 based on previous operating measurements, and, the user's requirements. The use of self-learning algorithm advantageously enables the controller 6 to determine the precise characteristics of the immersion heater 2 and the precise characteristics of hot water use in the dwelling and to use this knowledge, together with the radio transmissions to optimise the operation of the immersion heater 2 in real-time taking account of the characteristics of the water storage tank of the immersion heater 2 and the immersion element 3 of the immersion heater 2, hot water requirement, grid capacity and generation output.

In a few cases the terminal user facility 1 will be connected to a local natural power generator such as a solar panel, or a wind turbine for receiving power therefrom, according to the local weather conditions. The controller 6 is operable for regulating the supply of power from the natural power generator to the terminal user facility 1 and for using the power in the dwelling, or for storing the power in the immersion heater 2, or exporting the power to the electrical power supply grid 8 at appropriate times. It will be readily understood that the provision of a local natural power generator, or on-site generator, is not a requirement for the operation of the present invention.

It will be appreciated that any other energy storage device, other than the immersion heater 2 may be provided for example electric space heaters and the like.

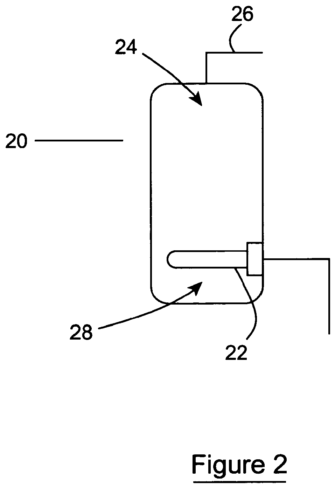

Referring to Figure 2, there is provided a hot water cylinder indicated by reference numeral 20. The hot water cylinder 20 comprises an immersion heater 22 and a thermistor (not shown) mounted on a hot water outlet pipe 26 to measure the upper tank temperature 24 and determine tap-on and tap-off events. The lower tank temperature 28 is also measured using a thermistor and associated thyristor.

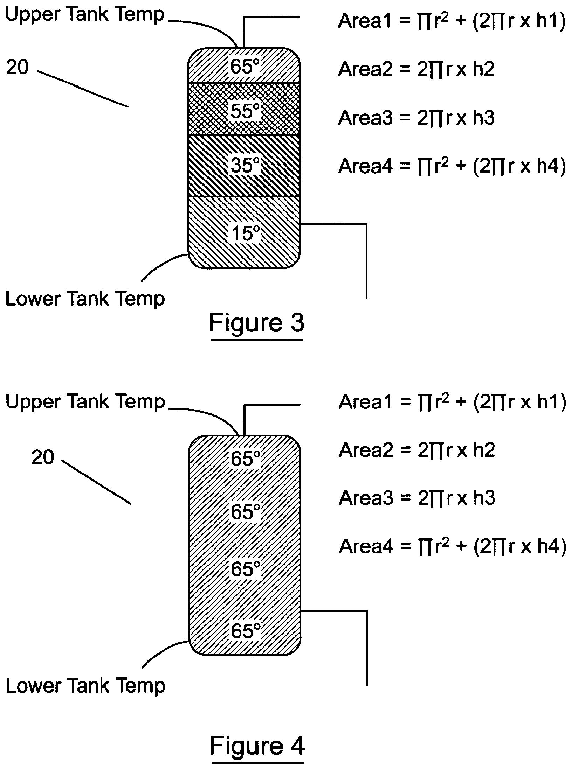

With reference to Figure 3, the stratification of the temperatures of the hot water in the hot water cylinder 20 are shown to be 65°C, 55°C, 35°C, and 15°C respectively in layers of descending order along the height of the hot water cylinder 20. The heat loss can be determined based on the area of the various sections of stratified hot water which are in contact with the top and bottom panels of the hot water cylinder tank 20 and the side wall of the hot water cylinder tank 20, which is to say any outer part of the hot water cylinder tank. This is explained further below by way of a heat loss equation.

The uppermost section, which relates to the 65°C layer of hot water will be given by the area of the upper part of the tank ($\pi r^2$) and the outer part of the layer which is in contact with the wall of the hot water cylinder ($2\pi r$ x height), wherein the height will be h1 for the 65°C section, h2 for of the 55°C section, h3 for the 35°C section and h4 for the 15°C section.

Referring to Figure 4, it is shown that a hot water cylinder 20 constructed in accordance with current prior art practice, with the immersion heater 22 switched on, heats the water throughout the entire hot water cylinder 20 so that all of the water is heated up to a temperature of 65°C.

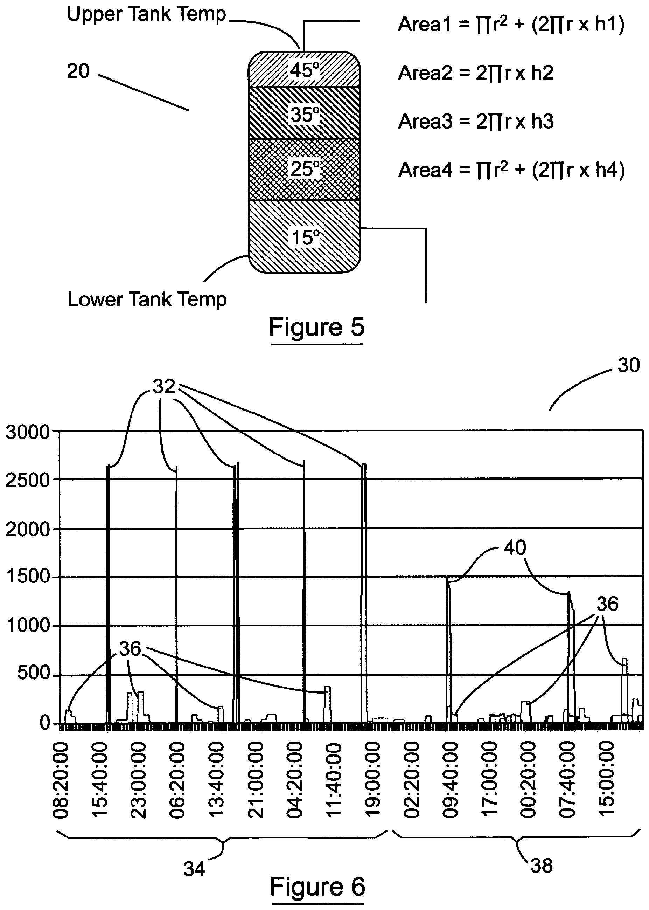

Finally, with reference to Figure 5, a hot water cylinder 20 is shown whereby the temperature of the hot water within the hot water cylinder 20 is maintained at a minimum, in accordance with the present invention, and therefore the uppermost section of hot water is at 45°C, with the remaining sections and layers of hot water, in descending order along the height of the hot water cylinder 20, at 35°C, 25°C, and 15°C respectively.

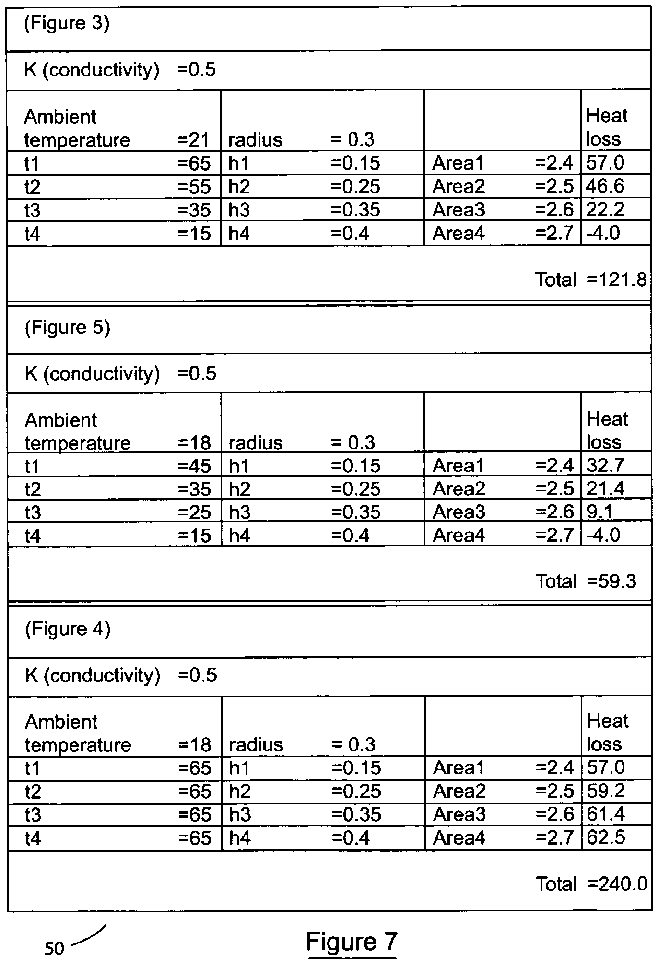

As can be seen in relation to the table shown in Figure 7, based on a conductivity of 0.5, with h1=150, h2=250, h3=350 and h4=400, and with a hot water cylinder tank having a radius of 0.3 metres, the heat loss from the hot water in the hot water cylinder can be calculated for the various scenarios shown in Figures 3 to 5. An ambient temperature of 18°C is assumed.

When all of the water is at 65°C, as in Figure 4, the heat loss is of the order of 240 Watts. The heat loss for the hot water cylinder of Figure 2 can be calculated by:

$$\text{Heat Loss} = ((65-18)*\text{Area1} + (55-18)*\text{Area2} + (35-18)*\text{Area3} + (12-18)*\text{Area4}) * \text{Conductivity}$$

Therefore, the calculated heat loss is 240 Watts.

When the water in the hot water cylinder is allowed to stratify without having the DSM system in accordance with the present invention as hereinbefore described, as shown in Figure 3 with the uppermost portion of the hot water will be at 65°C, the overall heat loss will be approximately 121.8 Watts. The heat loss for the hot water cylinder of Figure 2 can be calculated by:

$$\text{Heat Loss} = ((65-18)*\text{Area1} + (55-18)*\text{Area2} + (35-18)*\text{Area3} + (12-18)*\text{Area4}) * \text{Conductivity}$$

Therefore, the calculated heat loss is approximately equal to 121.8 Watts.

With the DSM system of the present invention in situ and controlling the operation of the immersion heater with respect to the characteristics of the hot water cylinder, the immersion heater itself, and the hot water requirement of the household, the temperature of the hot water in the hot water cylinder is kept at the minimum, which as can be seen in Figure 5 to be at most 45°C. Based on the same assumptions in relation to the conductivity of the hot water cylinder and the various heights of the stratified water sections, the heat loss is approximately 59 Watts. The heat loss for the hot water cylinder of Figure 2 can be calculated by:

$$\text{Heat Loss} = ((65-18)*\text{Area1} + (55-18)*\text{Area2} + (35-18)*\text{Area3} + (12-18)*\text{Area4}) * \text{Conductivity}$$

Therefore, the calculated heat loss is 59 Watts. This is significantly lower than 121.8 Watts - this is significantly lower than the heat loss that occurs when the water in the hot water cylinder is kept the temperatures as shown in Figure 3.

Turning briefly to Figure 6, it can be seen from the graph 30 that a plurality of power peaks, which is to say energy consumption peaks, indicated by reference numeral 32 occur when hot water is required by a household and the immersion heater is switched on to ensure that the hot water leaving the hot water cylinder is at a standard preset temperature. The hot water requirements are shown by reference numeral 36. The period indicated by reference numeral 34 indicates an initial calibration period, or a hot water cylinder which does not use the immersion heater management and controller system as hereinbefore described in accordance with the present invention. As can be seen during the period indicated by reference numeral 38, the power peaks 40 are significantly lower than those in the period 34, yet the hot water requirements 36 are substantially similar to those in the period indicated by reference numeral 34. A significant saving in energy is achieved.

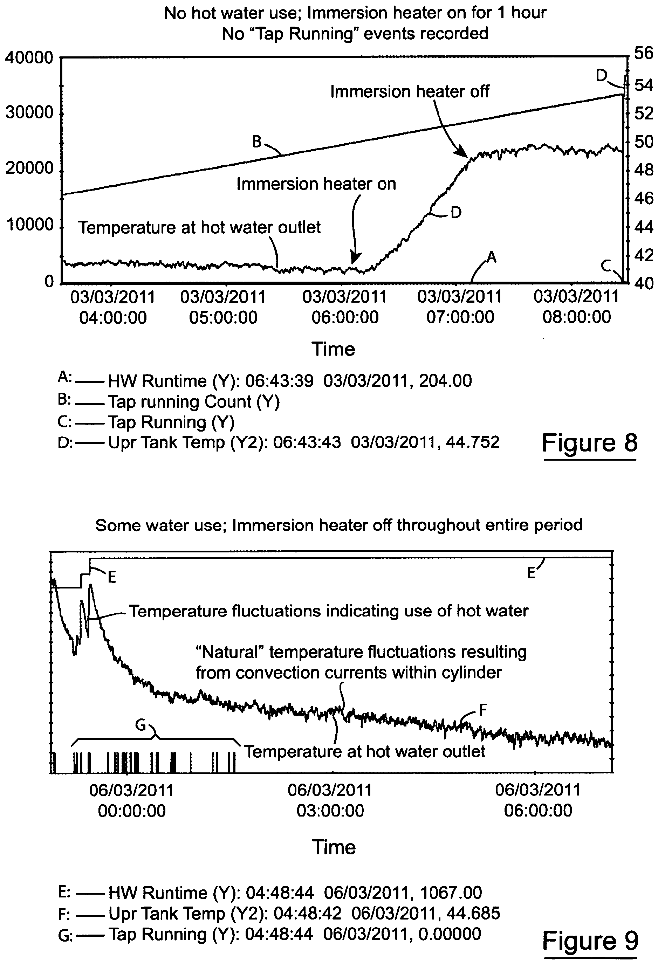

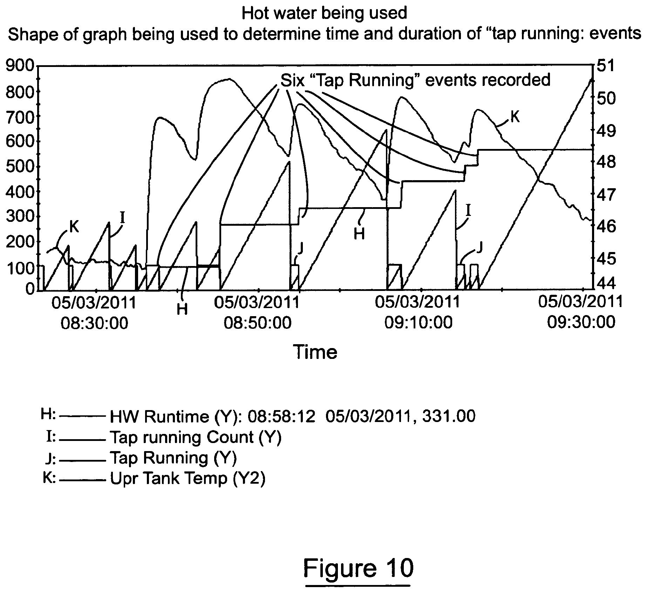

Referring to Figures 8 to 10, the plurality of graphs show the changes in temperature of the hot water which is output through the hot water outlet pipe from a hot water cylinder during use.

In particular, as can be seen from Figure 9, during an extended period of inactivity, as can be seen towards the right-hand side of the graph of Figure 9, natural temperature fluctuations can result in temperature changes which may appear as tap-on events. Tap-on events are shown in Figure 9 at the left most side of the graph. Dynamic comparator values are used to compare the change in temperature, along with the rate of change of temperature to detect the presence of a tap-on event and/or a tap-off event for the purposes of measuring the usage of hot water in a household by using very inexpensive thermistors and a single thyristor. This is significant as a very simple assembly may be used to provide detailed analysis on the usage of hot water by simply observing the temperature of the water within the hot water cylinder and the temperature of the water in the hot water outlet pipe from the hot water cylinder.

Thermistors located adjacent the immersion heater element at the lowermost portion of the hot water cylinder can detect when the immersion heater is switched on and when the immersion heater is switched off. Thermistors located on the hot water outlet pipe from the hot water cylinder can detect when hot water is passing through the hot water outlet pipe, and therefore when a tap-on event is occurring and when the temperature of the hot water outlet pipe drops below a predetermined threshold, given by a dynamic comparator value, then the assumption can be made that a tap-off event has occurred. The thermistors may be simply glued to the hot water outlet pipe and maybe mounted at the end of a copper pipe and inserted in the hot water cylinder in the mounting where the normal thermostat would be located.

Referring back to Figure 1, the controller 6 is provided with basic information on the immersion heater 2 or other energy storage device, such as, for example, the cylinder capacity and the rating of the immersion element 3. Over time it will generate an accurate profile of the immersion heater 2, measuring the rates of heating up and cooling down of the immersion heater 2, how much energy it can hold, energy discharge rates, rate of loss of heat across a range of temperatures and the controller 6 will also learn when hot water is needed in the dwelling. The controller 6 uses all this information to optimise the operation of the immersion heater 2 and store excess power generated by the natural power generator and release said excess power when required and at appropriate times into the electrical power supply grid 8.

The data stream transmitted by one or a number of radio stations, which is received and interpreted by the terminal user facility 1, is sent in radio packets according to known communication protocols. It will be understood that the packets may be designed to be relatively simple, comprising a small amount of information, or to be of higher complexity carrying greater amount of information depending on the sophistication of the electricity supply management system and the corresponding central controller in the electricity supply grid.

Each packet may preferably contain an address field. The address field may be used to inform the electricity supply management system in the dwelling and/or commercial buildings whether the data contained within the package is of relevance. For example, the address field may contain a 'send to all' code, a 'send to specific geographical region' code or a particular address called for a specific device on the electricity supply grid or a particular dwelling and/or commercial building.

The data stream in the package may preferably contain geographical location, such as the latitude, longitude, altitude, orientation, and/or degree of exposure to natural elements and the like. The location on the electricity supply grid may also be sent as part of the data stream. The location on the electricity supply grid may be given as a meter location or meter number, a cable identification number, a transformer identification number, a sub-station identification number and the like. Information regarding the electricity supplier and current tariff rates may also be provided. The additional information pertaining to the conditions on the electricity supply grid, the prevailing weather conditions and predicted weather conditions, the supply levels of locally generated energy from micro generators, market factors from market operators and electricity suppliers may also form part of the data stream packet.

The data stream packets are broadcast by one or more radio broadcast towers. Existing radio broadcast towers used for broadcasting radio and television programs in addition to other radio waves may be used by connecting these radio broadcast towers to the existing electricity supply grid sort of form a communication link with the central controller(s) and the electricity supply grid.

Known coding techniques may be preferably used in order to shorten the length of the data stream radio packets that need to be communicated to the electricity supply management systems and therefore this may simplify the radio transmission equipment required. In such a scenario, it is understood that coding and decoding units will also be required at the transmitter and receiver ends respectively. In further embodiments, encryption techniques, error detection and error correction techniques may be advantageously used.

It will be understood that throughout the preceding specification, the term "radio" refers to any type of electromagnetic communication above the infrared frequency range. The terms "grid control centre" and "central control server" have been used interchangeable throughout this specification.

It will be understood that the terms "tap-on" and "tap-off" refer to events whereby a valve within the household/building, or boundary of the household/building, is opened or closed respectively to allow or prohibited water to flow from the hot water cylinder.

It will be readily understood that a thyristor perform the operation of a variable switch can be equally well replaced by any fast switch solid state transistor such as a fact-acting Metal Oxide Semiconductor Field Effect Transistor (MOSFET) or Insulated Gate Bipolar Transistor (IGBT).

It should be further understood that the term "real-time" should be interpreted in a relatively broad manner and is not meant to refer to instantaneous conditions, but rather a general time frame which is within a few seconds of the present. Commonly a sub five second response is required for real-time DSM control. As RDS radio can be transmitted at circa 1.3 second intervals, and can be received and processed in milliseconds, the use of RDS radio is suitable for the real-time requirements of DSM systems.

Throughout much of the foregoing specification the present invention has been directed towards monitoring and controlling the operation of a hot water cylinder, immersion heater and associated piping forming a hot water system within a household or building. It will be readily understood that this monitoring and control may be equally well applied to any energy consuming systems within a household or building. For example, the system could be adapted to characterise the operating parameters of a battery bank in a user facility, and monitor the electricity requirements within the facility and ensure that a sufficient amount of power and electrical energy is maintained in the battery bank to meet the electricity requirements of the facility by diverting enough electoral energy generated by an on-site generator to the battery bank before allowing any further generate electricity to be exported to the grid.

It will be apparent to the skilled reader that the terms "electricity supply management system" and "demand side management system" or "DSM system" have been used interchangeably throughout the preceding specification and accordingly should both be accorded the widest possible interpretation.

The invention is not limited to the embodiments hereinbefore described which may be varied in both construction and detail in accordance with the appended claims.

**Claims**

**1.** An electricity supply management system (1) for a terminal user facility connected to an electrical power supply grid (8), the terminal user facility comprising an energy storage device (2) with means for monitoring one or more operating parameters of the energy storage device (2);

the monitoring means being connected to a controller (6) which is operably connected to the energy storage device (2) for controlling operation of the energy storage device (2);

**characterised in that**,
the controller (6) comprises a self-learning algorithm adapted to determine the operating characteristics of the energy storage device (2) connected thereto so as to improve the efficiency of the electricity supply management system (1) by adapting the response of the electricity supply management system (1) in accordance with the determined operating characteristics of the energy storage device (2).

2. An electricity supply management system (1) as claimed in claim 1, wherein, the energy storage device (2) is a hot water cylinder (2) comprising an immersion heater (3).

3. An electricity supply management system (1) as claimed in claim 2, wherein, the controller (6) performs an initial calibration to determine the characteristics of the hot water cylinder (2).

4. An electricity supply management system (1) as claimed in claim 3, wherein, the calibration is used to determine the hot water requirements of the occupants in the terminal user facility during a normal usage period.

5. An electricity supply management system (1) as claimed in claim 4, wherein, the electricity supply management system (1) logs the hot water usage of the terminal user facility by monitoring the amount of hot water which is used from the hot water cylinder (2), the duration of use and time of use.

6. An electricity supply management system (1) as claimed in any of claims 2 to 5, wherein, the electricity supply management system (1) generates a schedule of typical hot water usage within the terminal user facility and subsequently predicts likely hot water usages and requirements so as to ensure that a minimum amount of energy is input into the hot water cylinder (2) to generate a sufficient amount of hot water to provide for the hot water usage requirement according to the schedule of typical hot water usage.

7. An electricity supply management system (1) as claimed in any of claims 2 to 6, wherein, the electricity supply management system (1) comprises low cost temperature sensors (4) mounted on the hot water cylinder (2) and adjacent piping (26) to accurately monitor the hot water cylinder (2) and adjacent piping (26) so as to build up and continually update a schedule of hot water usage.

8. An electricity supply management system (1) as claimed in claim 7, wherein, the low cost temperature sensors (4) are thermistors (4).

9. An electricity supply management system (1) as claimed in any of claims 3 to 8, wherein, the electricity supply management system (1) measures the temperature of an outlet pipe (26) from the hot water cylinder (2) using a thermistor (4).

10. An electricity supply management system (1) as claimed in claim 9, wherein, tap-on and tap-off events are measured by measuring the temperature of the outlet pipe (26) which is indicative of whether hot water is flowing through the outlet pipe (26).

11. An electricity supply management system (1) as claimed in any of claims 2 to 10, wherein, the frequency, temperature and volume of hot water used during hot water usage events are monitored by the self-learning algorithm so that a continuous temperature profile is generated from readings given by a plurality of thermistors (4) located on the hot water cylinder (2).

12. An electricity supply management system (1) as claimed in claim 11, wherein, the readings given by a plurality of thermistors (4) are compared to dynamic comparator values, which are adjustable thresholds, to indicate a tap-on or tap-off event; and, the dynamic comparator values are adjust to take account of recent activity with the hot water cylinder.

13. An electricity supply management system (1) as claimed in any of claims 6 to 12, wherein, power delivered to the immersion heater is regulated by a solid-state relay device (SSR device) to ensure that hot water requirements as dictated by the schedule of typical hot water usage are met, and, to minimise heat losses from the hot water cylinder (2) by keeping the temperature of the water in the hot water cylinder (2) as low as possible while still meeting the hot water requirements.

14. An electricity supply management system (1) as claimed in any preceding claims, wherein, the electrical power supply grid (8) has at least one grid control centre to receive monitoring data from weather monitoring and forecast services and/or facilities, grid monitoring and control devices, and/or electricity generating facilities;
the electrical power supply grid having means to generate a data stream containing the monitoring data;
the electrical power supply grid transmitting the data stream by radio signal; the terminal user facility having a radio receiver (11) to receive the radio signal carrying the data stream;
the radio receiver (11) being connected to the controller (6) such that the controller (6) can optimise operation of the energy storage device (2) in response to the data stream received from the grid control centre.

**15.** An electricity supply management system (1) as claimed in claim 14, wherein, the grid control centre may transmit time based tariff profiles, real-time over-ride commands and planned and un-planned outages of the electricity supply grid to the terminal user facility.


**Patentansprüche**

**1.** Stromversorgungsverwaltungssystem (1) für eine Terminalnutzereinrichtung, die mit einem Stromversorgungsnetz (8) verbunden ist, wobei die Terminalnutzereinrichtung ein Energiespeichergerät (2) mit Mitteln zum Beobachten von einem oder mehreren Betriebsparametern des Energiespeichergeräts (2) umfasst;
wobei die Beobachtungsmittel mit einer Steuerung (6) verbunden sind, die betriebsbereit mit dem Energiespeichergerät (2) verbunden ist, um den Betrieb des Energiespeichergeräts (2) zu steuern;
**dadurch gekennzeichnet, dass**
die Steuerung (6) einen selbstlernenden Algorithmus umfasst, der angepasst ist, um die Betriebsmerkmale des damit verbundenen Energiespeichergeräts (2) zu bestimmen, um die Effizienz des Stromversorgungsverwaltungssystems (1) durch Anpassen der Reaktion des Stromversorgungsverwaltungssystems (1) in Übereinstimmung mit den bestimmten Betriebsmerkmalen des Energiespeichergeräts (2) zu verbessern.

**2.** Stromversorgungsverwaltungssystem (1) nach Anspruch 1, wobei das Energiespeichergerät (2) ein Warmwasserspeicher (2) ist, der einen Tauchsieder (3) umfasst.

**3.** Stromversorgungsverwaltungssystem (1) nach Anspruch 2, wobei die Steuerung (6) eine erste Kalibrierung durchführt, um die Merkmale des Warmwasserspeichers (2) zu bestimmen.

**4.** Stromversorgungsverwaltungssystem (1) nach Anspruch 3, wobei die Kalibrierung verwendet wird, um die Warmwasseranforderungen der Nutzer in der Terminalnutzereinrichtung während eines normalen Nutzungszeitraums zu bestimmen.

**5.** Stromversorgungsverwaltungssystem (1) nach Anspruch 4, wobei das Stromversorgungsverwaltungssystem (1) den Warmwassergebrauch der Terminalnutzereinrichtung durch Beobachten der Menge an Warmwasser, die aus dem Warmwasserspeicher (2) verwendet wird, der Dauer der Nutzung und der Zeit der Nutzung aufzeichnet.

**6.** Stromversorgungsverwaltungssystem (1) nach einem der Ansprüche 2 bis 5, wobei das Stromversorgungsverwaltungssystem (1) einen Plan des typischen Warmwassergebrauchs in der Terminalnutzereinrichtung erstellt und im Anschluss wahrscheinliche(n) Warmwassergebrauch und -anforderungen vorhersagt, um sicherzustellen, dass dem Warmwasserbehälter (2) eine Mindestmenge an Energie zugeführt wird, um eine ausreichende Menge an Warmwasser zur Berücksichtigung der Warmwassergebrauchsanforderung gemäß dem Plan des typischen Warmwassergebrauchs zu erzeugen.

**7.** Stromversorgungsverwaltungssystem (1) nach einem der Ansprüche 2 bis 6, wobei das Stromversorgungsverwaltungssystem (1) kostengünstige Temperatursensoren (4) umfasst, die an dem Warmwasserspeicher (2) und benachbarten Rohrleitungen (26) angebracht sind, um den Warmwasserspeicher (2) und die benachbarten Rohrleitungen (26) genau zu beobachten, um einen Plan des Warmwassergebrauchs zu erstellen und ständig zu aktualisieren.

**8.** Stromversorgungsverwaltungssystem (1) nach Anspruch 7, wobei die kostengünstigen Temperatursensoren (4) Thermistoren (4) sind.

**9.** Stromversorgungsverwaltungssystem (1) nach einem der Ansprüche 3 bis 8, wobei das Stromversorgungsverwaltungssystem (1) die Temperatur eines Abflussrohres (26) aus dem Warmwasserspeicher (2) unter Verwendung eines Thermistors (4) misst.

10. Stromversorgungsverwaltungssystem (1) nach Anspruch 9, wobei Auf- und Zudrehvorgänge gemessen werden, indem die Temperatur des Abflussrohres (26) gemessen wird, die angibt, ob Warmwasser durch das Abflussrohr (26) fließt.

11. Stromversorgungsverwaltungssystem (1) nach einem der Ansprüche 2 bis 10, wobei die Häufigkeit, die Temperatur und das Volumen des bei Vorgängen des Warmwassergebrauchs gebrauchten Warmwassers von dem selbstlernenden Algorithmus beobachtet werden, sodass aus Ablesungen, die durch eine Vielzahl von Thermistoren (4), die sich auf dem Warmwasserspeicher (2) befinden, erhalten werden, ein durchgehendes Temperaturprofil erstellt wird.

12. Stromversorgungsverwaltungssystem (1) nach Anspruch 11, wobei die durch eine Vielzahl von Thermistoren (4) erhaltenen Ablesungen mit dynamischen Vergleichswerten verglichen werden, die anpassbare Schwellen sind, um einen Auf- oder Zudrehvorgang anzuzeigen, und die dynamischen Vergleichswerte angepasst sind, um kürzliche Aktivität mit dem Warmwasserspeicher zu berücksichtigen.

13. Stromversorgungsverwaltungssystem (1) nach einem der Ansprüche 6 bis 12, wobei an den Tauchsieder gelieferte Elektrizität durch ein Halbleiterrelaisgerät (SSR-Gerät) reguliert wird, um sicherzustellen, dass Warmwasseranforderungen wie durch den Plan des typischen Warmwassergebrauchs vorgegeben erfüllt werden, und um Wärmeverluste aus dem Warmwasserspeicher (2) zu minimieren, indem die Temperatur des Wassers im Warmwasserspeicher (2) so gering wie möglich gehalten wird, während die Warmwasseranforderungen dennoch erfüllt werden.

14. Stromversorgungsverwaltungssystem (1) nach einem vorhergehenden Anspruch, wobei das Stromversorgungsnetz (8) mindestens ein Netzsteuerungszentrum aufweist, um Beobachtungsdaten von Wetterbeobachtungs- und - vorhersagediensten und/oder -einrichtungen, Netzbeobachtungs- und -steuergeräten und/oder Stromerzeugungseinrichtungen zu empfangen;
wobei das Stromversorgungsnetz Mittel zum Generieren eines Datenstroms, der die Beobachtungsdaten enthält, aufweist;
wobei das Stromversorgungsnetz den Datenstrom durch Funksignal überträgt;
wobei die Terminalnutzereinrichtung einen Funkempfänger (11) aufweist, um das Funksignal, das den Datenstrom trägt, zu empfangen;
wobei der Funkempfänger (11) mit der Steuerung (6) verbunden ist, sodass die Steuerung (6) den Betrieb des Energiespeichergeräts (2) als Reaktion auf den vom Netzsteuerungszentrum empfangenen Datenstrom optimieren kann.

15. Stromversorgungsverwaltungssystem (1) nach Anspruch 14, wobei das Netzsteuerungszentrum zeitbasierte Tarifprofile, Echtzeitübersteuerungsbefehle und geplante und ungeplante Abschaltungen des Stromversorgungsnetzes an die Terminalnutzereinrichtung übertragen kann.

**Revendications**

1. Système de gestion d'alimentation en électricité (1) pour une installation d'utilisateur final connectée à un réseau d'alimentation en énergie électrique (8), l'installation d'utilisateur final comprenant un dispositif de stockage d'énergie (2) doté d'un moyen pour contrôler un ou plusieurs paramètres de fonctionnement du dispositif de stockage d'énergie (2) ;
le moyen de contrôle étant connecté à un dispositif de commande (6) qui est fonctionnellement connecté au dispositif de stockage d'énergie (2) pour commander le fonctionnement du dispositif de stockage d'énergie (2) ;
**caractérisé en ce que**,
le dispositif de commande (6) comprend un algorithme d'auto-apprentissage adapté pour déterminer les caractéristiques de fonctionnement du dispositif de stockage d'énergie (2) connecté à celui-ci de manière à améliorer l'efficacité du système de gestion d'alimentation en électricité (1) en adaptant la réponse du système de gestion d'alimentation en électricité (1) conformément aux caractéristiques de fonctionnement déterminées du dispositif de stockage d'énergie (2).

2. Système de gestion d'alimentation en électricité (1) selon la revendication 1, dans lequel le dispositif de stockage d'énergie (2) est un cylindre d'eau chaude (2) comprenant un élément chauffant à immersion (3).

**3.** Système de gestion d'alimentation en électricité (1) selon la revendication 2, dans lequel le dispositif de commande (6) effectue un étalonnage initial pour déterminer les caractéristiques du cylindre d'eau chaude (2).

**4.** Système de gestion d'alimentation en électricité (1) selon la revendication 3, dans lequel l'étalonnage est utilisé pour déterminer les exigences en eau chaude des occupants dans l'installation d'utilisateur final durant une période d'utilisation normale.

**5.** Système de gestion d'alimentation en électricité (1) selon la revendication 4, dans lequel le système de gestion d'alimentation en électricité (1) connecte l'utilisation d'eau chaude de l'installation d'utilisateur final en contrôlant la quantité d'eau chaude qui est utilisée depuis le cylindre d'eau chaude (2), la durée d'utilisation et le moment d'utilisation.

**6.** Système de gestion d'alimentation en électricité (1) selon l'une quelconque des revendications 2 à 5, dans lequel le système de gestion d'alimentation en électricité (1) génère un programme d'utilisation classique d'eau chaude dans l'installation d'utilisateur final et prédit par la suite des exigences et utilisations d'eau chaude probables de manière à s'assurer qu'une quantité d'énergie minimale est entrée dans le cylindre d'eau chaude (2) afin de générer une quantité suffisante d'eau chaude pour répondre à l'exigence d'utilisation d'eau chaude selon le programme d'utilisation classique d'eau chaude.

**7.** Système de gestion d'alimentation en électricité (1) selon l'une quelconque des revendications 2 à 6, dans lequel le système de gestion d'alimentation en électricité (1) comprend des capteurs de température à bas coût (4) montés sur le cylindre d'eau chaude (2) et une conduite adjacente (26) pour contrôler de manière précise le cylindre d'eau chaude (2) et la conduite adjacente (26) de manière à constituer et à mettre en jour continuellement un programme d'utilisation d'eau chaude.

**8.** Système de gestion d'alimentation en électricité (1) selon la revendication 7, dans lequel les capteurs de température à bas coût (4) sont des thermistances (4).

**9.** Système de gestion d'alimentation en électricité (1) selon l'une quelconque des revendications 3 à 8, dans lequel le système de gestion d'alimentation en électricité (1) mesure la température d'un tuyau de sortie (26) à partir du cylindre d'eau chaude (2) à l'aide d'une thermistance (4).

**10.** Système de gestion d'alimentation en électricité (1) selon la revendication 9, dans lequel des événements d'ouverture et de fermeture sont mesurés en mesurant la température du tuyau de sortie (26) qui indique si de l'eau chaude circule à travers le tuyau de sortie (26).

**11.** Système de gestion d'alimentation en électricité (1) selon l'une quelconque des revendications 2 à 10, dans lequel la fréquence, la température et le volume d'eau chaude utilisée durant des événements d'utilisation d'eau chaude sont contrôlés par l'algorithme d'auto-apprentissage de telle sorte qu'un profil de température continu est généré à partir de lectures données par une pluralité de thermistances (4) situées sur le cylindre d'eau chaude (2).

**12.** Système de gestion d'alimentation en électricité (1) selon la revendication 11, dans lequel les lectures données par une pluralité de thermistances (4) sont comparées à des valeurs de comparateur dynamique, qui sont des seuils ajustables, pour indiquer un événement d'ouverture et de fermeture ; et, les valeurs de comparateur dynamique sont ajustées pour prendre en compte l'activité récente avec le cylindre d'eau chaude.

**13.** Système de gestion d'alimentation en électricité (1) selon l'une quelconque des revendications 6 à 12, dans lequel l'énergie délivrée à l'élément chauffant à immersion est régulée par un dispositif relais à semi-conducteurs (dispositif SSR) pour s'assurer que les exigences en eau chaude telles que dictées par le programme d'utilisation classique d'eau chaude sont satisfaites, et, pour minimiser les pertes de chaleur du cylindre d'eau chaude (2) en maintenant la température de l'eau dans le cylindre d'eau chaude (2) aussi basse que possible tout en continuant à satisfaire les exigences en eau chaude.

**14.** Système de gestion d'alimentation en électricité (1) selon l'une quelconque des revendications précédentes, dans lequel le réseau d'alimentation en énergie électrique (8) comporte au moins un centre de commande de réseau pour recevoir des données de contrôle provenant d'installations et/ou services de prévision et de contrôle météorologiques, des dispositifs de contrôle et de commande de réseau et/ou des installations de génération d'électricité ; le réseau d'alimentation en énergie électrique comportant un moyen pour générer un flux de données contenant les données de contrôle ;
le réseau d'alimentation en énergie électrique transmettant le flux de données par signal radio ;
l'installation d'utilisateur final comportant un récepteur radio (11) pour recevoir le signal radio transportant le flux de données ;
le récepteur radio (11) étant connecté au dispositif de commande (6) de telle sorte que le dispositif de commande (6) peut optimiser le fonctionnement du dispositif de stockage d'énergie (2) en réponse au flux de données reçu depuis le centre de commande de réseau.

15. Système de gestion d'alimentation en électricité (1) selon la revendication 14, dans lequel le centre de commande de réseau peut transmettre à l'installation d'utilisateur final des profils de tarif horaire, des instructions de surpassement en temps réel et des interruptions planifiées et non planifiées du réseau d'alimentation en électricité.

Figure 1

Figure 2

Upper Tank Temp

20

65°

55°

35°

15°

Lower Tank Temp

$Area1 = \prod r^2 + (2\prod r \times h1)$

$Area2 = 2\prod r \times h2$

$Area3 = 2\prod r \times h3$

$Area4 = \prod r^2 + (2\prod r \times h4)$

## Figure 3

Upper Tank Temp

20

65°

65°

65°

65°

Lower Tank Temp

$Area1 = \prod r^2 + (2\prod r \times h1)$

$Area2 = 2\prod r \times h2$

$Area3 = 2\prod r \times h3$

$Area4 = \prod r^2 + (2\prod r \times h4)$

## Figure 4

Upper Tank Temp

20

Lower Tank Temp

$Area1 = \Pi r^2 + (2\Pi r \times h1)$

$Area2 = 2\Pi r \times h2$

$Area3 = 2\Pi r \times h3$

$Area4 = \Pi r^2 + (2\Pi r \times h4)$

**Figure 5**

**Figure 6**

(Figure 3)

K (conductivity)   =0.5

| Ambient temperature | =21 | radius | = 0.3 | | | Heat loss |
|---|---|---|---|---|---|---|
| t1 | =65 | h1 | =0.15 | Area1 | =2.4 | 57.0 |
| t2 | =55 | h2 | =0.25 | Area2 | =2.5 | 46.6 |
| t3 | =35 | h3 | =0.35 | Area3 | =2.6 | 22.2 |
| t4 | =15 | h4 | =0.4 | Area4 | =2.7 | -4.0 |
| | | | | | | |
| | | | | | Total | =121.8 |

(Figure 5)

K (conductivity)   =0.5

| Ambient temperature | =18 | radius | = 0.3 | | | Heat loss |
|---|---|---|---|---|---|---|
| t1 | =45 | h1 | =0.15 | Area1 | =2.4 | 32.7 |
| t2 | =35 | h2 | =0.25 | Area2 | =2.5 | 21.4 |
| t3 | =25 | h3 | =0.35 | Area3 | =2.6 | 9.1 |
| t4 | =15 | h4 | =0.4 | Area4 | =2.7 | -4.0 |
| | | | | | | |
| | | | | | Total | =59.3 |

(Figure 4)

K (conductivity)   =0.5

| Ambient temperature | =18 | radius | = 0.3 | | | Heat loss |
|---|---|---|---|---|---|---|
| t1 | =65 | h1 | =0.15 | Area1 | =2.4 | 57.0 |
| t2 | =65 | h2 | =0.25 | Area2 | =2.5 | 59.2 |
| t3 | =65 | h3 | =0.35 | Area3 | =2.6 | 61.4 |
| t4 | =65 | h4 | =0.4 | Area4 | =2.7 | 62.5 |
| | | | | | | |
| | | | | | Total | =240.0 |

50

## Figure 7

## No hot water use; Immersion heater on for 1 hour
## No "Tap Running" events recorded

A: —— HW Runtime (Y): 06:43:39 03/03/2011, 204.00
B: —— Tap running Count (Y)
C: —— Tap Running (Y)
D: —— Upr Tank Temp (Y2): 06:43:43 03/03/2011, 44.752

**Figure 8**

## Some water use; Immersion heater off throughout entire period

E: —— HW Runtime (Y): 04:48:44 06/03/2011, 1067.00
F: —— Upr Tank Temp (Y2): 04:48:42 06/03/2011, 44.685
G: —— Tap Running (Y): 04:48:44 06/03/2011, 0.00000

**Figure 9**

Hot water being used
Shape of graph being used to determine time and duration of "tap running: events

H:———— HW Runtime (Y): 08:58:12  05/03/2011, 331.00
I:———— Tap running Count (Y)
J:———— Tap Running (Y)
K:———— Upr Tank Temp (Y2)

## Figure 10

**EP 2 643 737 B1**

REFERENCES CITED IN THE DESCRIPTION

**Patent documents cited in the description**

- US 2006036350 A, BOHRER
- US 2010114385 A, DEMPSTER